# FASCICULE DE BREVET EUROPEEN

(11) **EP 1 996 415 B1**
(45) Date de publication et mention de la délivrance du brevet: **26.12.2012**
(21) Numéro de dépôt: 07712444.4
(22) Date de dépôt: 05.03.2007
(51) Int. Cl.: B60G 17/015, B60G 3/00, B60G 21/00

(54) **VÉHICULE À DISPOSITIF DE SUSPENSION À VARIATION DE CARROSSAGE.**
FAHRZEUG MIT EINER AUFHÄNGUNGSVORRICHTUNG MIT VARIABLEM RADSTURZ
VEHICLE WITH A VARIABLE-CAMBER SUSPENSION DEVICE

(30) Priorité: 09.03.2006 FR 0602240
(43) Date de publication de la demande: 03.12.2008
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: ANDRE, François, F-63540 Romagnat (FR); BLONDELET, Michel, F-63450 Le Crest (FR)
(74) Mandataire: Lasson, Cédric Y. M.
(86) Numéro de dépôt international: PCT/EP2007/052059
(87) Numéro de publication internationale: WO 2007/101838

(56) Documents cités:
- WO-A-2004/009383
- WO-A-2004/052666
- GB-A- 2 270 508

## Description

La présente invention concerne la liaison au sol des véhicules automobiles, en particulier les dispositifs de suspension permettant un degré de liberté de carrossage de la roue par rapport à la caisse du véhicule. L'invention concerne plus particulièrement les véhicules de tourisme (passenger cars).

Les dispositifs de suspension ont deux fonctions principales qui doivent être assurées simultanément à tout moment lors du fonctionnement. L'une de ces fonctions est de suspendre le véhicule, c'est à dire permettre des oscillations sensiblement verticales de chaque roue en fonction de la charge appliquée à cette roue. L'autre fonction de ces dispositifs est de guider la roue c'est à dire contrôler la position angulaire du plan de roue.

On appelle "plan de roue" le plan, lié à la roue, qui est perpendiculaire à l'axe de la roue et qui passe par le centre de l'aire de contact statique au sol lorsque la roue est verticale. Le plan de roue ainsi défini est donc solidaire de l'axe de roue et son orientation varie comme celle de la roue.

La position angulaire du plan de roue par rapport à la caisse du véhicule est définie par deux angles, l'angle de carrossage et l'angle de braquage. L'angle de carrossage d'une roue est l'angle séparant, dans un plan transversal perpendiculaire au sol, le plan de roue du plan médian du véhicule.

L'angle de braquage d'une roue est l'angle séparant, dans un plan horizontal parallèle au sol, le plan de roue du plan médian du véhicule.

La demande de brevet EP 1070609 décrit un dispositif de suspension permettant un degré de liberté de carrossage de la roue sensiblement indépendant des mouvements de suspension. Les mouvements de suspension sont permis par un système multi-bras ou à double triangle. Les variations de carrossage sont provoquées par des déplacements des points d'articulation des bras par rapport à la caisse du véhicule de manière passive sous l'effet des efforts agissant sur le véhicule et/ou de manière active par l'intermédiaire d'un actionneur commandé.

La demande internationale WO 01/72572 décrit un dispositif de suspension dans lequel c'est le support de roue qui permet un degré de liberté de carrossage de la roue par rapport aux éléments de suspension. Ce degré de liberté est contrôlé soit de manière active, par exemple par un vérin en fonction de paramètres de roulage du véhicule, soit de manière passive par les efforts qui s'exercent sur la roue dans l'aire de contact.

La demande internationale WO 04/058521 décrit un autre dispositif de support de roue permettant un degré de liberté de carrossage de la roue par rapport aux éléments de suspension. Les moyens de carrossage comprennent une triple charnière liée d'une part au porte-roue et d'autre part aux éléments de suspension, ladite triple charnière comprenant deux joues et deux leviers, chacun des leviers étant respectivement solidaire de l'une des deux joues, les leviers étant liés d'une part au porte-roue et d'autre part aux éléments de suspension.

GB2270508 divalgue un disposition de suspension de type conventionnel.

De nombreux autres exemples de système de suspension à variation de carrossage existent. Une caractéristique commune à tous ces dispositifs de support et de suspension à variation de carrossage est qu'ils comportent par rapport à des dispositifs de suspension conventionnels, une mobilité supplémentaire permettant, en plus de la suspension verticale, le carrossage de la roue par rapport à la caisse. Le mouvement de carrossage de la roue par rapport à la caisse a lieu autour d'un axe de carrossage. Cet axe sensiblement horizontal est représenté par un point dans le plan de carrossage. On a également proposé d'adopter une position inclinée de l'axe par rapport à l'horizontale afin d'obtenir des effets de braquage en même temps que les effets de carrossage. Une difficulté est apparue dans le choix de l'angle d'inclinaison car l'inclinaison idéale constitue en fait un compromis de performances dynamiques du véhicule, ces performances étant parfois antagonistes. Par exemple, une inclinaison favorable à la stabilité à haute vitesse peut être défavorable en terme d'agilité ou d'agrément de conduite à vitesse modérée. L'invention a donc en particulier pour objectif de pallier à cette difficulté de choix de l'inclinaison de l'axe de carrossage.

Cet objectif est atteint par un véhicule comprenant un dispositif de suspension à variation de carrossage, ledit dispositif de suspension autorisant un mouvement de suspension sensiblement verticale et un mouvement de carrossage de la roue par rapport à la caisse du véhicule, le mouvement de suspension verticale et le mouvement de carrossage étant sensiblement indépendants, dans lequel le dispositif de suspension est lié à la caisse par des moyens de liaison autorisant une rotation du dispositif de suspension par rapport à la caisse autour d'un axe de rotation transversal.

De préférence, lesdits moyens de liaison sont configurés de manière à autoriser une rotation du dispositif de suspension par rapport à la caisse autour d'un axe de rotation transversal situé verticalement entre le sol et le centre de la roue. De préférence l'axe transversal est situé longitudinalement en avant du centre de la roue.

De préférence, le mouvement de carrossage de la roue ayant lieu autour d'un axe instantané de rotation, lesdits moyens de liaison sont configurés de manière à ce que l'axe instantané de rotation soit sensiblement horizontal lorsque la roue ne transmet aucun effort de freinage et que l'axe instantané de rotation soit incliné vers l'avant lorsque la roue transmet un effort de freinage. De préférence encore, lesdits moyens de liaison sont configurés de manière à ce que l'axe instantané de rotation soit sensiblement horizontal lorsque le dispositif de suspension porte sa charge de référence et que l'axe instantané de rotation soit incliné vers l'avant lorsque le dispositif de suspension porte une charge verticale supérieure à ladite charge de référence. De préférence encore, lesdits moyens de liaison sont configurés de manière à ce que l'axe instantané de rotation soit sensiblement horizontal lorsque la roue ne transmet aucun effort moteur et que l'axe instantané de rotation soit incliné vers l'avant lorsque la roue transmet un effort moteur.

De préférence, les moyens de liaison sont des articulations élastiques, la rotation du dispositif de suspension étant occasionnées par la déformation desdites articulations.

De préférence, la rotation du dispositif de suspension est contrôlée par des moyens de contrôle actifs en fonction de paramètre de roulage du véhicule.

L'invention sera mieux comprise grâce à la description des figures qui représentent respectivement:
- Figures 1 et 2 : vues schématiques de derrière de véhicules selon l'invention.
- Figures 3 à 5 : vues schématiques de côté d'un véhicule selon l'invention, l'avant du véhicule se trouvant à gauche des figures.
- Figures 6 et 7 : vues schématiques de dessus d'un véhicule selon l'invention.
- Figures 8 et 9 : vues schématiques de derrière d'un véhicule selon l'invention.

Sur les différentes figures, les éléments identiques ou similaires portent les mêmes numéros de références. Leur description n'est donc pas reprise systématiquement. De plus, on a représenté les axes du repère lié au véhicule. Selon les conventions habituelles, l'axe X est longitudinal et dirigé vers l'avant, l'axe Y est transversal et dirigé vers la gauche et l'axe Z est vertical et dirigé vers le haut.

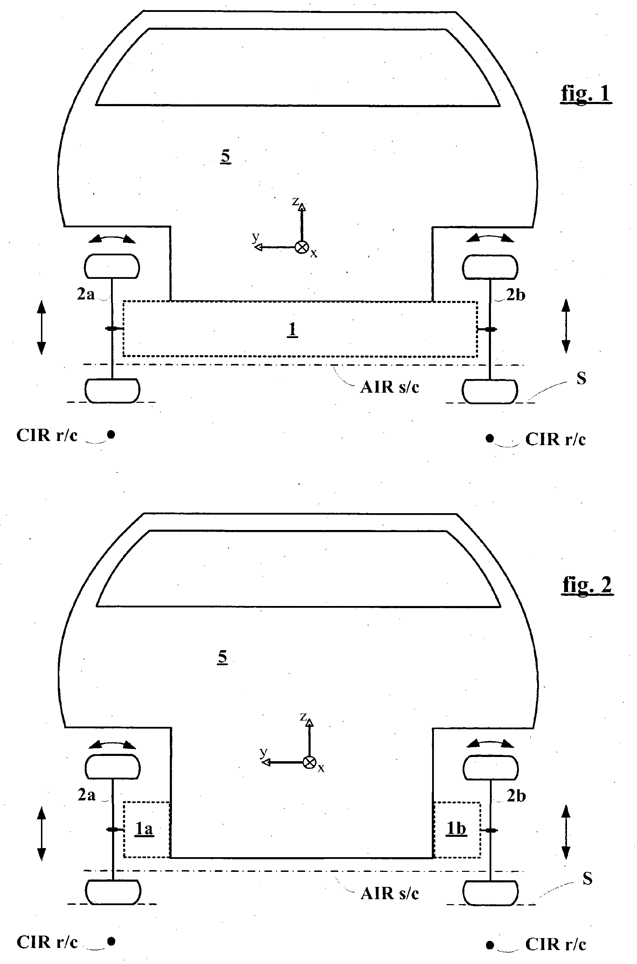

A la figure 1, on a représenté schématiquement en vue de derrière un véhicule selon l'invention. La caisse 5 repose sur le sol S par l'intermédiaire d'un dispositif de suspension 1. Le dispositif de suspension 1 autorise le débattement vertical et la variation de carrossage de chaque roue (gauche 2a et droite 2b) de manière dépendante ou non pour chaque roue. Le dispositif de suspension est lié à la caisse par des moyens de liaison non représentés ici. Des exemples de dispositifs de suspension à variation de carrossage selon cette architecture sont décrits par exemple à la figure 14 du document WO 04/052666 ou à la figure 10 du document WO 04/009383.

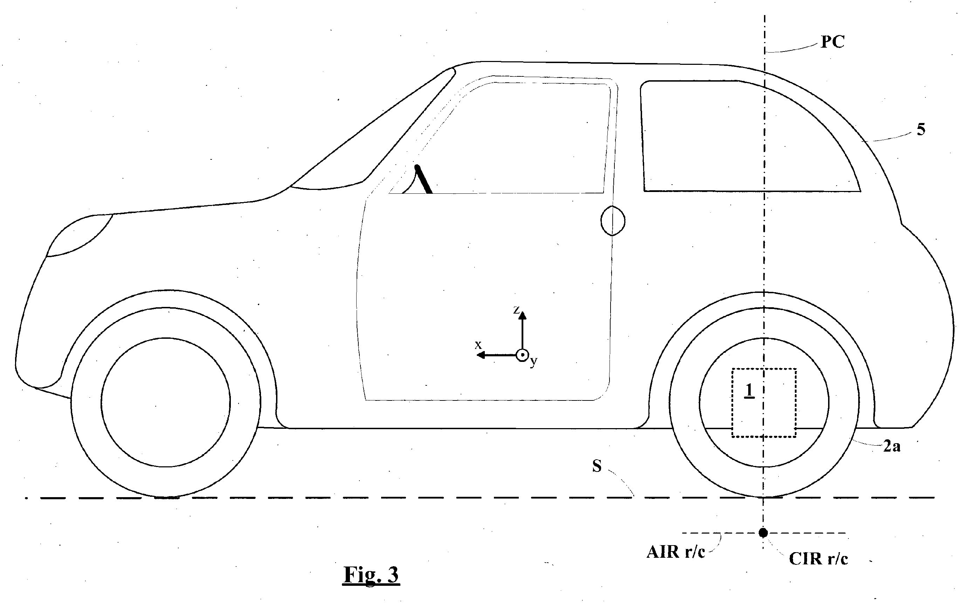

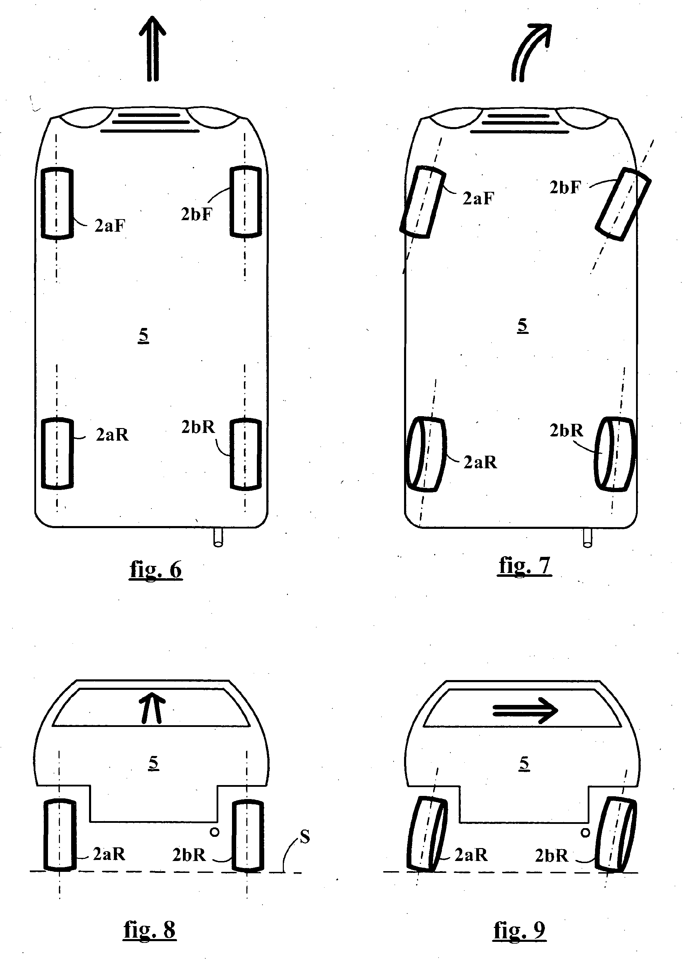

A la figure 2, on a représenté schématiquement en vue de derrière un véhicule dont la caisse 5 repose sur le sol S par l'intermédiaire de deux dispositifs de suspension (un dispositif gauche la et un dispositif droit 1b). Chaque dispositif de suspension autorise le débattement vertical et la variation de carrossage de chaque roue (gauche 2a et droite 2b) de manière indépendante ou non de l'autre roue. Cette représentation illustre également le fait que chacun des deux dispositifs de suspension est lié à la caisse par des moyens de liaison propres, non représentés ici. Des exemples de dispositifs de suspension à variation de carrossage selon cette architecture sont décrits par exemple à la figure 3 du document WO 04/058521, à la figure 9 de WO 04/009383 ou à la figure 7 de la demande de brevet FR 2880302.

Le mouvement de carrossage de la roue par rapport à la caisse s'effectue autour d'un centre instantané de rotation (CIR r/c) placé de préférence sous le sol afin que les efforts transversaux agissant sur la roue dans l'aire de contact provoquent les variations de carrossage visées sans qu'il soit nécessaire d'avoir recours à un actionneur de carrossage.

A la figure 3, on voit le côté gauche d'un véhicule dont l'essieu arrière utilise un système de suspension selon les figures 1 ou 2. Comme sur les figures précédentes, le dispositif de suspension est représenté schématiquement en trait pointillé. Sur cette vue, on peut représenter l'axe instantané de rotation (AIR r/c) autour duquel se produit le mouvement de carrossage de la roue 2a par rapport à la caisse 5. Cet axe (que l'on appellera aussi « axe de carrossage » dans la suite de la demande) passe par le point CIR r/c de la vue plane des figures 1 et 2. L'axe instantané de rotation est ici représenté horizontal, c'est à dire orthogonal au plan de carrossage PC. Alternativement, l'axe de carrossage peut également être légèrement incliné afin de générer des variations de braquage en même temps que des variations de carrossage.

Ce qui vient d'être exposé en référence aux figures 1 à 3 correspond à l'état de la technique.

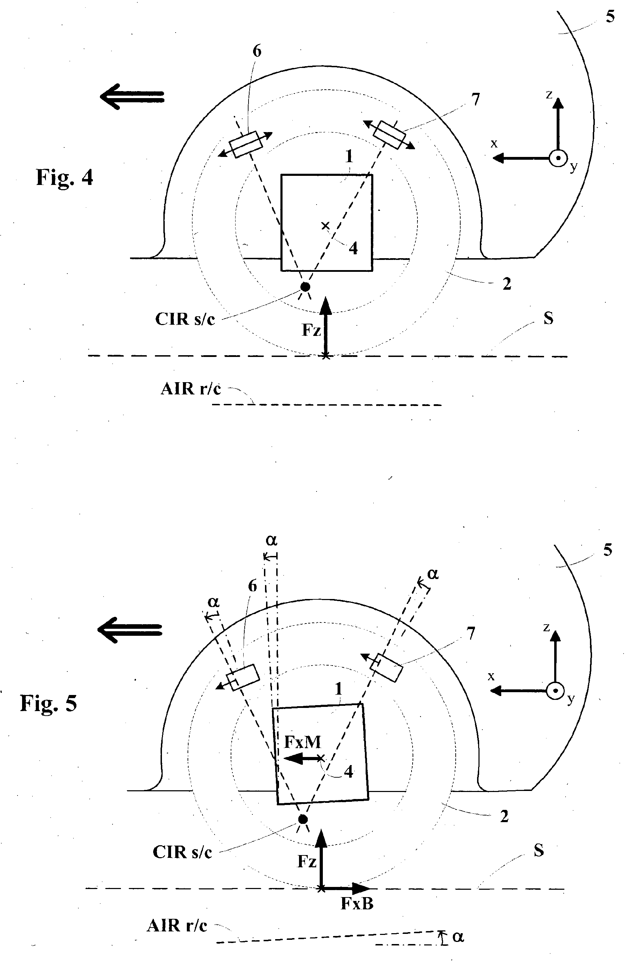

Les figures 4 et 5 représentent un principe de l'invention selon lequel le dispositif de suspension 1 est lié à la caisse de telle sorte qu'il puisse en outre pivoter (dans son ensemble) relativement à la caisse autour d'un axe de rotation transversal afin de faire varier l'inclinaison de l'axe de carrossage. Sur les vues de côté des figures 4 et 5, l'axe transversal passe par le point CIR s/c. Sur les vues longitudinales des figures 1 et 2, l'axe transversal de rotation AIR s/c est bien visible.

Sur l'exemple des figures 4 et 5, on a représenté schématiquement les moyens de liaison du dispositif de suspension à la caisse comme des articulations élastiques 6 et 7 autorisant par exemple chacune un déplacement le long de leur axe et configurées pour définir ladite rotation du dispositif de suspension par rapport à la caisse autour dudit axe transversal.

La comparaison des figures 4 et 5 illustre le principe de fonctionnement de l'invention. A la figure 4, l'axe de carrossage (AIR r/c) est horizontal. A la figure 5, l'axe de carrossage est incliné vers l'avant du véhicule d'un angle α correspondant à l'angle α de pivotement du dispositif de suspension autour de l'axe transversal. On comprend que l'on peut dès lors utiliser cette mobilité supplémentaire pour faire varier l'inclinaison de l'axe de carrossage de manière active ou passive et en fonction de nombreux paramètres.

Dans le cadre d'un fonctionnement passif, selon la position précise de l'axe transversal, les efforts s'exerçant dans la liaison au sol auront tendance à faire pivoter le dispositif de suspension dans un sens ou dans l'autre (c'est à dire vers l'avant comme à la figure 5 ou vers l'arrière).

De préférence, l'axe transversal se situe verticalement au moins 50 mm au dessus du sol afin que les efforts de freinage FxB aient pour effet d'incliner l'axe de carrossage vers l'avant du véhicule comme représenté ici.

De préférence, pour une essieu moteur, l'axe transversal se situe verticalement au moins 100 mm au dessous de l'axe de la roue 4 afin que les forces motrices FxM aient également pour effet d'incliner l'axe de carrossage vers l'avant du véhicule comme représenté ici.

De préférence encore, l'axe transversal se situe en outre horizontalement légèrement en avant (par exemple au moins 30 mm) du centre de la roue 4 afin que les efforts verticaux Fz aient également pour effet d'incliner l'axe de carrossage vers l'avant du véhicule comme représenté ici. De préférence, le véhicule est configuré de manière à ce que la variation de charge verticale n'ait pas d'effet sur l'inclinaison de l'axe de carrossage tant que la charge vertical ne dépasse pas celle correspondant à la charge de référence du véhicule, c'est à dire lorsque le véhicule est en ordre de marche (tous les réservoirs de fluides sont pleins) et transporte deux passagers assis aux places avant.

Dans le cadre d'un fonctionnement actif, c'est à dire lorsque l'on utilise un actionneur pour imposer une rotation contrôlée du dispositif de suspension, la position de l'axe transversal peut être choisie plus librement, en fonction par exemple de critères d'encombrement et de niveaux d'énergie consacrée à cet actionneur. La commande active de l'inclinaison de l'axe de carrossage peut être faite en fonction de paramètres de roulage du véhicule comme par exemple la vitesse, l'accélération longitudinale ou transversale du véhicule, l'angle au volant, la vitesse de rotation du volant, le couple exerce sur le volant, le roulis, la vitesse de roulis, l'accélération de roulis, le lacet, la vitesse de lacet, l'accélération de lacet, les efforts sur les roues y compris la charge verticale, le type de conduite, le comportement souhaité par le conducteur.

L'actionneur peut être de tout type (par exemple électrique, mécanique, hydraulique), pourvu qu'il soit adapté à l'application visée de l'invention.

De préférence, l'axe de carrossage est sensiblement horizontale en l'absence de variation et la variation utile (α) de l'angle d'inclinaison est d'au moins 5°, de préférence encore 10°.

Les moyens de liaison du ou des dispositif(s) de suspension à la caisse peuvent prendre tout forme permettant une rotation relative autour d'un axe transversal. Il est apparu avantageux de réaliser cette fonction par l'intermédiaire des liaisons élastiques qui relient de manière connue en soi le ou les berceau(x) («subframe(s)») du ou des dispositifs de suspension à la caisse d'un véhicule. La fonction habituelle de ces liaisons est de favoriser le confort en réduisant la transmission de chocs et de vibrations. Dans le cadre de l'invention, en adoptant des raideurs et une configuration spatiale adéquates, on peut donner à ces liaisons la fonction supplémentaire de permettre la rotation du dispositif de suspension autour d'un axe transversal.

Alternativement, les moyens de liaisons peuvent par exemple prendre la forme d'un guidage par glissière courbe, l'axe de la courbure correspondant à l'axe transversal de rotation visé. Une pluralité de glissières rectilignes orientées et combinées de manière adéquate peut également être utilisée.

Le dispositif de suspension à variation de carrossage peut également comprendre un moyen de contrôle actif du carrossage, commandé également en fonction des paramètres de roulage du véhicule.

Les figures 6, 7, 8 et 9 illustrent schématiquement un fonctionnement possible du véhicule selon l'invention. La figure 8 est une vue de derrière de la situation représentée en vue de dessus à la figure 6. La figure 9 est une vue de derrière de la situation représentée en vue de dessus à la figure 7. Sur cet exemple, comme sur les précédents, seul l'essieu arrière du véhicule utilise un dispositif de suspension selon l'invention. Aux figures 6 et 8, le véhicule roule en ligne droite, le braquage et le carrossage de ses roues sont sensiblement nuls. Aux figures 7 et 9, le véhicule parcourt une courbe à droite. Ses roues avant (2aF et 2bF) sont braquées vers l'intérieur du virage de manière conventionnelle. L'axe de carrossage est incliné vers l'avant, par exemple parce que le conducteur freine. De ce fait, ses roues arrière sont inclinées vers l'intérieur du virage (la roue extérieure 2aR est en contre-carrossage et la roue intérieure 2bR en carrossage) et sont également braquées vers l'intérieur du virage. La stabilité (et donc sa sécurité) du véhicule en virage est ainsi favorisée.

## Revendications

1. Véhicule comprenant un dispositif de suspension à variation de carrossage, ledit dispositif de suspension (1) autorisant un mouvement de suspension sensiblement verticale et une mobilité supplémentaire permettant, en plus de la suspension verticale, un mouvement de carrossage de la roue (2a) par rapport à la caisse (5) du véhicule, le mouvement de suspension verticale et le mouvement de carrossage étant sensiblement indépendants, dans lequel le dispositif de suspension est lié à la caisse par des moyens de liaison (6, 7) autorisant une rotation (α) du dispositif de suspension par rapport à la caisse autour d'un axe de rotation transversal (AIR s/c).

2. Véhicule selon la revendication 1 dans lequel lesdits moyens de liaison sont configurés de manière à autoriser une rotation du dispositif de suspension par rapport à la caisse autour d'un axe de rotation transversal situé verticalement entre le sol (S) et le centre de la roue (4).

3. Véhicule selon l'une des revendications précédentes dans lequel l'axe transversal est situé longitudinalement en avant du centre de la roue (4).

4. Véhicule selon l'une des revendications précédentes dans lequel, le mouvement de carrossage de la roue ayant lieu autour d'un axe instantané de rotation (AIR r/c), lesdits moyens de liaison sont configurés de manière à ce que l'axe instantané de rotation soit sensiblement horizontal lorsque la roue ne transmet aucun effort de freinage et que l'axe instantané de rotation soit incliné vers l'avant lorsque la roue transmet un effort de freinage (FxB).

5. Véhicule selon l'une des revendications précédentes dans lequel, le mouvement de carrossage de la roue ayant lieu autour d'un axe instantané de rotation (AIR r/c), lesdits moyens de liaison sont configurés de manière à ce que l'axe instantané de rotation soit sensiblement horizontal lorsque le dispositif de suspension porte sa charge de référence et que l'axe instantané de rotation soit incliné vers l'avant lorsque le dispositif de suspension porte une charge verticale supérieure à ladite charge de référence.

6. Véhicule selon l'une des revendications précédentes dans lequel, le mouvement de carrossage de la roue ayant lieu autour d'un axe instantané de rotation (AIR r/c), lesdits moyens de liaison sont configurés de manière à ce que l'axe instantané de rotation soit sensiblement horizontal lorsque la roue ne transmet aucun effort moteur et que l'axe instantané de rotation soit incliné vers l'avant lorsque la roue transmet un effort moteur (FxM).

7. Véhicule selon l'une des revendications précédentes dans lequel les moyens de liaison sont des articulations élastiques, la rotation du dispositif de suspension étant occasionnée par la déformation desdites articulations.

8. Véhicule selon l'une des revendications précédentes dans lequel la rotation du dispositif de suspension est contrôlée par des moyens de contrôle actifs en fonction de paramètres de roulage du véhicule.

9. Véhicule selon l'une des revendications précédentes dans lequel l'axe de rotation transversal (AIR s/c) se situe verticalement au moins 50 mm au dessus du sol (S).

10. Véhicule selon l'une des revendications précédentes dans lequel l'axe de rotation transversal (AIR s/c) se situe verticalement au moins 100 mm au dessous de l'axe de la roue.

11. Véhicule selon l'une des revendications précédentes dans lequel l'axe de rotation transversal (AIR s/c) se situe horizontalement au moins 30 mm en avant du centre de la roue.

12. Véhicule selon l'une des revendications précédentes dans lequel ledit système de suspension équipe un essieu arrière dudit véhicule.

## Claims

1. Vehicle comprising a variable-camber suspension device, the said suspension device (1) allowing a substantially vertical suspension movement and an additional mobility which, besides the vertical suspension, allows for a camber movement of the wheel (2a) with respect to the body (5) of the vehicle, the vertical suspension movement and the camber movement being substantially independent, wherein the suspension device is connected to the body by connection means (6, 7) allowing a rotation (α) of the suspension device with respect to the body about a transverse axis of rotation (AIR s/c).

2. Vehicle according to Claim 1 wherein the said connection means are configured so as to allow a rotation of the suspension device with respect to the body about a transverse axis of rotation situated vertically between the ground (S) and the centre of the wheel (4).

3. Vehicle according to either of the preceding claims, wherein the transverse axis is situated longitudinally in front of the centre of the wheel (4).

4. Vehicle according to one of the preceding claims wherein, with the camber movement of the wheel taking place about an instantaneous axis of rotation (AIR r/c), the said connection means are configured such that the instantaneous axis of rotation is substantially horizontal when the wheel does not transmit any braking force and such that the instantaneous axis of rotation is inclined towards the front when the wheel transmits a braking force (FxB).

5. Vehicle according to one of the preceding claims wherein, with the camber movement of the wheel taking place about an instantaneous axis of rotation (AIR r/c), the said connection means are configured such that the instantaneous axis of rotation is substantially horizontal when the suspension device bears its reference load and such that the instantaneous axis of rotation is inclined towards the front when the suspension device bears a vertical load which is greater than the said reference load.

6. Vehicle according to one of the preceding claims wherein, with the camber movement of the wheel taking place about an instantaneous axis of rotation (AIR r/c), the said connection means are configured such that the instantaneous axis of rotation is substantially horizontal when the wheel does not transmit any driving force and such that the instantaneous axis of rotation is inclined towards the front when the wheel transmits a driving force (FxM).

7. Vehicle according to one of the preceding claims wherein the connection means are elastic articulations, the rotation of the suspension device being brought about by the deformation of the said articulations.

8. Vehicle according to one of the preceding claims wherein the rotation of the suspension device is controlled by active control means as a function of vehicle running parameters.

9. Vehicle according to one of the preceding claims wherein the transverse axis of rotation (AIR s/c) is situated vertically at least 50 mm above the ground (S).

10. Vehicle according to one of the preceding claims wherein the transverse axis of rotation (AIR s/c) is situated vertically at least 100 mm below the axis of the wheel.

11. Vehicle according to one of the preceding claims wherein the transverse axis of rotation (AIR s/c) is situated horizontally at least 30 mm in front of the centre of the wheel.

12. Vehicle according to one of the preceding claims wherein the said suspension system equips a rear axle of the said vehicle.

## Patentansprüche

1. Fahrzeug mit einer Aufhängungsvorrichtung mit variablem Radsturz, wobei die Aufhängungsvorrichtung (1) eine Bewegung einer im Wesentlichen senkrechten Aufhängung und eine zusätzliche Mobilität erlaubt, die zusätzlich zur senkrechten Aufhängung eine Radsturzbewegung des Rads (2a) bezüglich der Karosserie (5) des Fahrzeugs ermöglicht, wobei die senkrechte Aufhängungsbewegung und die Radsturzbewegung im Wesentlichen unabhängig sind, wobei die Aufhängungsvorrichtung mit der Karosserie über Verbindungseinrichtungen (6, 7) verbunden ist, die eine Drehung (α) der Aufhängungsvorrichtung bezüglich der Karosserie um eine Querdrehachse (AIR s/c) erlauben.

2. Fahrzeug nach Anspruch 1, bei dem die Verbindungseinrichtungen konfiguriert sind, um eine Drehung der Aufhängungsvorrichtung bezüglich der Karosserie um eine Querdrehachse zu erlauben, die sich senkrecht zwischen dem Boden (S) und der Mitte des Rads (4) befindet.

3. Fahrzeug nach einem der vorhergehenden Ansprüche, bei dem die Querachse sich in Längsrichtung vor der Mitte des Rads (4) befindet.

4. Fahrzeug nach einem der vorhergehenden Ansprüche, bei dem, da die Radsturzbewegung des Rads um eine augenblickliche Drehachse (AIR r/c) erfolgt, die Verbindungseinrichtungen so konfiguriert sind, dass die augenblickliche Drehachse im Wesentlichen waagrecht ist, wenn das Rad keine Bremskraft überträgt, und dass die augenblickliche Drehachse nach vorne geneigt ist, wenn das Rad eine Bremskraft (FxB) überträgt.

5. Fahrzeug nach einem der vorhergehenden Ansprüche, bei dem, wenn die Radsturzbewegung des Rads um eine augenblickliche Drehachse (AIR r/c) erfolgt, die Verbindungseinrichtungen so konfiguriert sind, dass die augenblickliche Drehachse im Wesentlichen waagrecht ist, wenn die Aufhängungsvorrichtung ihre Bezugslast trägt, und dass die augenblickliche Drehachse nach vorne geneigt ist, wenn die Aufhängungsvorrichtung eine senkrechte Last trägt, die höher als die Bezugslast ist.

6. Fahrzeug nach einem der vorhergehenden Ansprüche, bei dem, wenn die Radsturzbewegung des Rads um eine augenblickliche Drehachse (AIR r/c) erfolgt, die Verbindungseinrichtungen so konfiguriert sind, dass die augenblickliche Drehachse im Wesentlichen waagrecht ist, wenn das Rad keine Antriebskraft überträgt, und dass die augenblickliche Drehachse nach vorne geneigt ist, wenn das Rad eine Antriebskraft (FxM) überträgt.

7. Fahrzeug nach einem der vorhergehenden Ansprüche, bei dem die Verbindungseinrichtungen elastische Gelenke sind, wobei die Drehung der Aufhängungsvorrichtung durch die Verformung der Gelenke verursacht wird.

8. Fahrzeug nach einem der vorhergehenden Ansprüche, bei dem die Drehung der Aufhängungsvorrichtung von aktiven Steuereinrichtungen abhängig von Fahrparametern des Fahrzeugs gesteuert wird.

9. Fahrzeug nach einem der vorhergehenden Ansprüche, bei dem die Querdrehachse (AIR s/c) sich senkrecht mindestens 50 mm über dem Boden (S) befindet.

10. Fahrzeug nach einem der vorhergehenden Ansprüche, bei dem die Querdrehachse (AIR s/c) sich senkrecht mindestens 100 mm unter der Achse des Rads befindet.

11. Fahrzeug nach einem der vorhergehenden Ansprüche, bei dem die Querdrehachse (AIR s/c) sich waagrecht mindestens 30 mm vor der Mitte des Rads befindet.

12. Fahrzeug nach einem der vorhergehenden Ansprüche, bei dem das Aufhängungssystem eine Hinterachse des Fahrzeugs bestückt.
